(19) Europäisches Patentamt
European Patent Office
Office européen des brevets

(11) **EP 3 540 699 A1**

(12) **EUROPÄISCHE PATENTANMELDUNG**

(43) Veröffentlichungstag:
**18.09.2019 Patentblatt 2019/38**

(51) Int Cl.:
***G07C 3/14*** *(2006.01)*

(21) Anmeldenummer: **19162766.0**

(22) Anmeldetag: **14.03.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **15.03.2018 DE 102018203976**

(71) Anmelder: **HOMAG GmbH**
**72296 Schopfloch (DE)**

(72) Erfinder:
• **Rothfuss, Stefan**
**72270 Baiersbronn (DE)**
• **Zetzsche, Michael**
**72458 Albstadt (DE)**
• **Straub, Heiko**
**72108 Rottenburg a. N. (DE)**

(74) Vertreter: **Hoffmann Eitle**
**Patent- und Rechtsanwälte PartmbB**
**Arabellastraße 30**
**81925 München (DE)**

(54) **VERFAHREN ZUR FEHLERERKENNUNG UND ANLAGE ZUM BEARBEITEN EINES WERKSTÜCKS**

(57) Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist, umfassend die Schritte: Erfassen einer Werkstückparameters in zumindest zwei Segmenten der Anlage; auf Basis der erfassten Werkstückparameter ermitteln, ob ein Fehler vorliegt; wenn ein Fehler vorliegt, Identifizieren in welchem der zumindest zwei Segmente der Anlage der Fehler vorliegt, zum örtlichen Eingrenzen der Fehlerursache; und Ausgeben eines Signals, das die Information enthält, in welchem Segment der Fehler vorliegt.

Fig. 1

EP 3 540 699 A1

## Beschreibung

Die vorliegende Erfindung betrifft ein Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist. Die vorliegende Erfindung betrifft ferner die Verwendung eines solchen Verfahrens, einen Datenträger, auf dem ein Programm gespeichert ist, das zum Ausführen des Verfahrens geeignet ist, ein Sensorausrüstungsset für eine Anlage zum Bearbeiten eines Werkstücks, und eine Anlage zum Bearbeiten eines Werkstücks.

Anlagen zum Bearbeiten eines Werkstücks mit Laufbändern, auf denen Werkstücke gefördert werden, werden oft mit hoher Durchsatzgeschwindigkeit betrieben. Zum Beispiel in einer industriellen Kantenanlage für Holzwerkstücke, in welcher letztere mit einer Massivholz- oder Papierkante versehen werden, - wie sie in der Möbelherstellung Verwendung finden - werden teilweise zwischen 8000 und 12000 Werkstücke pro Tag bearbeitet.

Die Erfahrung zeigt, dass in solchen Hochleistungsanlagen ein Leistungsverlust auftreten kann, dessen Ursache nicht leicht festzustellen ist. Manchmal tritt ein solcher Leistungsverlust zudem schleichend auf, so dass die Anzahl bearbeiteter Werkstücke pro Tag langsam zurückgeht und der Rückgang nicht sofort erkannt wird. Ist die Leistung dann irgendwann spürbar abgefallen (beispielsweise um 10 oder 20 Prozent), so ist zwar sicher, dass ein Fehler in der Anlage vorliegt - zum Beispiel ein Defekt an einem Laufband oder an einer Maschine -, es ist aber unklar, woher der Fehler rührt. Zudem ist ein solcher spürbarer Leistungsabfall als solches nicht wünschenswert, ein früheres Eingreifen aber möglicherweise aus wirtschaftlichen Gründen nicht durchführbar.

Das Erkennen eines Fehlers erfolgt daher oft erst spät, nachdem sich ein schleichender Leistungsverlust bereits über einen gewissen Zeitraum fortgesetzt hat, bis sich ein spürbarer Leistungsabfall der Anlage bemerkbar macht. Da die Werkstückbearbeitungsanlagen in der Regel komplex aufgebaut sind und über mehrere Bearbeitungsaggregate (beispielsweise ein Sägeaggregat, ein Bohraggregat, ein Verleimungsaggregat, ein Pressaggregat, ein Schweißaggregat, etc.), sowie dazwischenliegende Laufbandabschnitte verfügen, kann das im Anschluss an das Erkennen eines Fehlers erfolgende Identifizieren einer Fehlerursache zeitaufwendig sein. Manchmal ist es auch notwendig, die Produktion in einer Anlage zu unterbrechen, um in diversen Aggregaten und bei diversen Laufbandabschnitten weitere Abklärungen durchzuführen, um festzustellen, ob die betreffenden Aggregate bzw. Laufbandabschnitte einen Fehler (Defekt) aufweisen.

Es ist nachteilig, dass ein Erkennen eines Fehlers oft erst spät möglich ist. Weiterhin ist es nachteilig, dass sich ein schleichender Leistungsverlust nicht früher erkennen lässt, und dass sich als Voraussetzung für ein Erkennen bzw. für ein Eingreifen durch Ausschalten der Anlage und Untersuchungen zuerst ein bemerkbarer Leistungsabfall in der Anlage einstellen muss. Überdies ist es auch von Nachteil, dass erhebliche Produktionsverluste durch Ausfallzeiten entstehen können.

Es ist somit eine Aufgabe der vorliegenden Erfindung, einen oder mehrere der beschriebenen Nachteile bekannter Werkstückbearbeitungsanlagen zu beseitigen.

Beschreibungseinleitung

Ein Aspekt der vorliegenden Erfindung bezieht sich auf ein Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist. Das Verfahren umfasst die Schritte: Erfassen eines Werkstückparameters in zumindest zwei Segmenten der Anlage; auf Basis der erfassten Werkstückparameter Ermitteln, ob ein Fehler vorliegt; wenn ein Fehler vorliegt, Identifizieren in welchem der zumindest zwei Segmente der Anlage der Fehler vorliegt, zum örtlichen Eingrenzen der Fehlerursache; und Ausgeben eines Signals, das die Information enthält, in welchem Segment der Fehler vorliegt.

Vorzugsweise wird ermittelt, ob ein zukünftiger Leistungsverlust der Anlage zu erwarten ist, und dass ein Fehler vorliegt, wenn ein zukünftiger Leistungsverlust erwartet wird. Auf diese Weise wird bereits proaktiv ein Fehler identifiziert (d.h., auf das Vorliegen des Fehlers geschlossen), wenn ein Leistungsverlust noch gar nicht tatsächlich aufgetreten ist, sondern bereits dann, wenn in der Zukunft ein Leistungsverlust zu erwarten ist (ein zukünftiger Leistungsverlust). Der Leistungsverlust ist bei einigen Ausführungsformen dadurch definiert, dass eine Stückzahl von durch die Anlage während einer vorbestimmten Zeiteinheit verarbeiteten Werkstücken unter einen vorbestimmten Grenzwert fällt. Bei anderen Ausführungsformen ist der Leistungsverlust als eine andere die Leistung der Anlage quantifizierende Kenngröße definiert, oder beispielsweise als ein unter einen vorbestimmten Grenzwert fallen einer solchen Kenngröße. Bei einigen Ausführungsformen ist ein Leistungsverlust definiert als das außerhalb eines vorbestimmten Wertebereichs Fallen einer solchen Kenngröße.

Die vorbestimmte Zeiteinheit kann beispielsweise ein Minute, eine Stunde, oder ein Tag (oder eine andere geeignete Zeiteinheit) sein. Bei einigen Ausführungsformen kann ein Benutzer die Zeiteinheit auch selbst vorbestimmen oder anpassen. So kann ein Leistungsverlust beispielsweise dadurch definiert sein, dass die Anlage weniger als 8500 Werkstücke pro Tag verarbeitet, etc. Vorzugsweise wird der Grenzwert in der Holzverarbeitung (insbesondere der Kantenverarbeitung) in einem Bereich von 7000 bis 10000 Werkstücke pro Tag (oder einer dazu äquivalenten Größe) definiert.

Vorzugsweise wird das Vorliegen des Fehlers ermittelt, bevor der Leistungsverlust tatsächlich auftritt. Dadurch wird bereits dann ein Fehler erkannt, wenn ein Leistungsverlust sich erst schleichend bemerkbar machen würde bzw. wenn sich ein Leistungsverlust gar erst anbahnt, d.h., bevor also ein tatsächlicher Leistungsverlust auftritt. Bevor die verarbeitete Stückzahl absinkt kann also beispielsweise erkannt werden, dass eine Reduktion der Stückzahl demnächst zu erwarten ist. Auf Basis dieser Information kann dann proaktiv eingegriffen werden. Zum Beispiel kann ein Wartungszeitpunkt vorgezogen werden, oder es kann während einer Routinewartung auch spezifisch Aufmerksamkeit auf das als mit einem Fehler behaftet identifizierte Segment der Anlage gerichtet werden, etc. Somit kann gegen einen tatsächlichen Leistungsverlust vorgebeugt werden. Oft lässt sich dieser sogar verhindern, oft jedenfalls abschwächen.

Bei einigen Ausführungsformen wird der Fehler auf Basis einer zeitlichen Entwicklung von erfassten Zustandsinformationen ermittelt. Auf diese Weise lassen sich beispielsweise Tendenzen frühzeitig erkennen, und somit kann gegen einen schleichenden Leistungsverlust vorgebeugt werden.

Die Anlage kann zwei oder mehr Segmente aufweisen, und bei einigen Ausführungsformen wird nicht in allen (beispielsweise nur in zwei) Segmenten ein Werkstückparameter erfasst. Bei anderen Ausführungsformen wird in jedem Segment ein Werkstückparameter erfasst. Die Aufteilung in Segmente kann dabei stark kompartimentiert sein - also beispielsweise so, dass jedes Bearbeitungsaggregat der Anlage in einem unterschiedlichen Segment positioniert ist oder sogar so, dass ein Aggregat mehreren Segmenten zugeordnet ist, und so, dass verschiedene Laufbandabschnitte verschiedenen Segmenten zugeordnet sind - oder die Aufteilung kann grob sein - also zum Beispiel mehrere Aggregate in einem Segment, etc.

Der in verschiedenen Segmenten erfasste Werkstückparameter kann derselbe Werkstückparameter oder ein unterschiedlicher Werkstückparameter sein.

Ein erfasster Werkstückparameter kann beispielsweise eine geometrische Größe, eine Materialeigenschaft, eine Anzahl von Werkstücken, eine Anzahl Werkstücke pro Zeiteinheit, Ziehklingenspan, (loses) Kantenband, Deckschichtüberstand, eine Schüsselung eines Werkstücks, eine Nut, eine Bohrung, ein Ausbruch, ein Dekor und/oder ein Reflexionsgrad einer Oberfläche, eine Länge, Höhe und/oder Dicke sein.

Da sich ein schleichender Leistungsverlust auf die Qualität von Werkstücken auswirken kann, ist ein Werkstückparameter eine besonders geeignete Größe zur frühzeitigen Erkennung eines Leistungsverlusts oder eines Fehlers (Defekts) in der Anlage. Wenn ein Leistungsabfall eintritt und Qualitätsverluste bei den Werkstücken auftreten, so kann sich ein zu erfassender Werkstückparameter ändern.

Da in zumindest zwei Segmenten ein Werkstückparameter erfasst wird, lässt sich beim Auftreten eines Fehlers erkennen, in welchem Segment der Anlage (aller Voraussicht nach) ein Fehler bzw. Defekt vorliegt. Da zudem ein Signal ausgegeben wird, welches einer Person anzeigt, in welchem Segment der Fehler auftritt, lässt sich die Fehlerursache effizient eingrenzen. Dies ist vorteilhaft, da weitere Abklärungen ortsspezifisch in der Anlage durchgeführt werden können. Eine Möglichkeit besteht zum Beispiel darin, nur einen Teil (zum Beispiel das Segment mit dem erkannten Fehler) vorübergehend auszuschalten und zu untersuchen. Andere Teile der Anlage können weiterhin betrieben werden. Auf diese Weise lassen sich Produktionsverluste verringern oder sogar eliminieren.

Das Ausgeben des Signals kann zentral oder dezentral erfolgen. Zum Beispiel kann ein jeweiliges Fehlersignal bei dem jeweiligen Segment ausgegeben werden. Alternativ dazu können Signale für alle Segmente an einen Computer und/oder eine Steuerung ausgegeben werden. Einige oder alle Segmente, bei denen ein Werkstückparameter erfasst wird, können auch Information übermitteln, und ein anderes Element gibt dann ein Signal aus.

Gemäß einiger bevorzugter Ausführungsformen wird das Verfahren bei einer Anlage genutzt, die zwei oder mehr Aggregate zum Bearbeiten oder Überprüfen von Werkstücken aufweist, wobei mindestens zwei Aggregate unterschiedlichen Segmenten zugeordnet sind. Auf diese Weise lässt sich die Fehlerursache aggregatsspezifisch eingrenzen. Gemäß einiger Ausführungsformen wird bei einer Vielzahl von (zum Beispiel bei allen) Aggregaten ein Werkstückparameter erfasst und nach Fehlern gesucht. Dies macht die Fehlererkennung und Ursacheneingrenzung besonders effizient.

Gemäß einiger bevorzugter Ausführungsformen beinhaltet das Identifizieren, dass der Fehler einem bestimmten Aggregat oder einem bestimmten Teil der Anlage zwischen zwei Aggregaten zugeordnet wird, und das ausgegebene Signal beinhaltet die Information, welches Aggregat oder welcher Teil der Anlage zwischen zwei Aggregaten fehlerbehaftet ist. Dabei kann ein Teil zwischen zwei Aggregaten oder können mehrere Teile zwischen Aggregaten Laufbandabschnitte sein oder einen oder mehrere Laufbandabschnitte aufweisen. Die Ursacheneingrenzung für Fehler ist bei diesen Ausführungsformen besonders spezifisch.

Gemäß einiger bevorzugter Ausführungsformen ist zumindest ein der erfassten Werkstückparameter ein Abstand von einem Sensor zu einem Werkstück und/oder eine Dicke, eine Höhe, eine Länge, oder eine Breite des Werkstücks. Zum Erfassen eines Abstands kann beispielsweise ein Lasersensor eingesetzt werden, beispielsweise mit einer Reichweite in einem Millimeter bis zu einem Meterbereich, beispielsweise bis zu 130mm. Besonders vorteilhaft ist der Einsatz von einem Lasersensor oberhalb der Werkstücke, mit dem ein erster Abstand d1 bis zu dem Werkstück gemessen wird, und eines weiteren Lasersensors unterhalb des Werkstücks, mit dem ein zweiter Abstand d1 bis zu dem Werkstück gemessen wird. Damit lässt sich beispielsweise in einfacher Weise eine Werkstückdicke ermitteln, wenn der Abstand $d_{sum}$ zwischen den beiden Sensoren bekannt ist (und diese entsprechend ausgerichtet sind, um senkrecht zur Werkstückförderebene zu messen). Die Werkstückdicke d entspricht der Differenz des Abstands und der gemessen Abstände: $d=d_{sum}-(d1+d2)$.

Gemäß einiger bevorzugter Ausführungsformen wird überprüft, ob ein Werkstück eine unerwünschte Biegung aufweist, indem Abstände von einem Sensor oder mehreren Sensoren zu zumindest zwei unterschiedlichen Positionen des Werkstücks gemessen werden, und für jeden der gemessenen Abstände ermittelt wird, ob der jeweilige Abstand einen unteren bzw. einen oberen Grenzwert unter- bzw. überschreitet, oder ermittelt wird, ob die Summe der Abstände oder ein anderer Parameter, der eine Funktion der Abstände ist, einen unteren bzw. einen oberen Grenzwert unter- bzw. überschreitet. Auch in diesem Fall werden beispielsweise Lasersensoren eingesetzt.

Gemäß einiger bevorzugter Ausführungsformen wird überprüft, ob der erfasste Werkstückparameter oder ein Parameter, der eine Funktion der des erfassten Werkstückparameters oder der erfassten Werkstückparameter ist, innerhalb eines vorbestimmten Toleranzbereichs liegt. Falls ein oder mehrere Werkstückparameter oder eine Funktion davon außerhalb des Toleranzbereichs liegen, wird bei einigen Ausführungsformen auf das Vorliegen eines Fehlers geschlossen. Bei weiteren Ausführungsformen wird zusätzlich oder alternativ dazu auf das Vorliegen eines Fehlers geschlossen, wenn der Toleranzbereich während einer vorbestimmten Zeitdauer oder mit einer bestimmten Anzahl von Wiederholungen (mit, und bei anderen Ausführungsformen, ohne Unterbrechungen) verlassen wird. Zum Beispiel wird bei einigen Ausführungsformen auf das Vorliegen eines Fehlers geschlossen, wenn ein Toleranzbereich während fünf Minuten konsequent verlassen worden ist, oder wenn 50% der Werkstücke während mehr als 20 Minuten den Toleranzbereich verlassen, etc.

Gemäß einiger bevorzugter Ausführungsformen wird gezählt, wie oft derselbe Fehler auftritt und ermittelt wird, ob die Anzahl desselben Fehlers einen vorbestimmten Schwellenwert überschreitet, und es wird eine Fehlermeldung ausgegeben, wenn der Schwellenwert überschritten wird. Auf diese Weise lassen sich schleichende Leistungsverluste in besonders effizienter Weise und/oder frühzeitig erkennen.

Es können erfasste Werkstückparameter aus mehreren Segmenten verglichen werden. Ebenfalls ist es bei Ausführungsformen vorgesehen, dass mehrere Werkstückparameter in einem Segment oder derselbe Werkstückparameter an mehreren Stellen im selben Segment erfasst werden.

Gemäß einiger bevorzugter Ausführungsformen wird ein Fehler aus einer Tendenz von erfassten Werten eines Werkstückparameters oder aus Tendenzen von mehreren erfassten Werkstückparametern erkannt. Auf diese Weise lässt sich eine besonders proaktive, frühzeitige Fehlererkennung durchführen. Insbesondere lassen sich schleichende Leistungsverluste besonders früh erkennen, selbst dann, wenn sich diese noch nicht in einem Produktionsverlust niederschlagen. Wenn beispielsweise die durchschnittliche Dicke von Werkstücken jeden Tag um einen gewissen Wert zunimmt oder abnimmt, so kann ein für die Dicke (mit)verantwortliches Aggregat (beispielsweise ein Sägeaggregat oder ein Schleifaggregat, etc.) frühzeitig (beispielsweise während einer regulären Auszeit der Anlage) untersucht werden und bei Notwendigkeit entsprechend gewartet werden. Entsprechend kann auch mit Laufbandabschnitten umgegangen werden.

Ein weiterer Aspekt der vorliegenden Erfindung liegt in der Verwendung des Verfahrens gemäß irgendeiner der vorstehend beschriebenen Ausführungsformen (oder einer Kombination verschiedener Ausführungsformen) in einer Kantenanlage zum Bearbeiten einer Kante eines Werkstücks und/oder zum Aufbringen eines Kantenelements an einem Werkstück. In solchen Kantenanlage ist eine frühzeitige Fehlererkennung und eine Eingrenzung einer Fehlerursache besonders vorteilhaft, da große Taktzahlen (zum Beispiel 8000-12000 Werkstücke pro Tag) erreicht werden, und somit eine zusätzliche Auszeit zu einem spürbaren Leistungsverlust führt.

Gemäß einiger Ausführungsformen wird eine Diagonale einer Fläche eines Werkstücks berechnet oder gemessen, vorzugsweise der größten Werkstückfläche, und ein Toleranzwert auf einen Wert im Bereich von 0.1% bis 1% der Diagonale eingestellt wird, wobei überprüft wird, ob eine Dicke und/oder eine Flachheit zumindest eines Teils eines Werkstücks nicht mehr als um den Toleranzwert von einem vorbestimmten Sollwert abweicht, und wobei der Toleranzwert vorzugsweise auf einen Wert zwischen 300 μm und 2.5 mm eingestellt wird. Für Holzbearbeitungsanlagen erlauben diese numerischen Bereiche bzw. Werte eine besonders effiziente Fehlererkennung.

Die Erfindung betrifft auch einen Datenträger, auf dem ein Programm gespeichert ist, welches dazu geeignet ist, auf einer Datenverarbeitungsanlage ausgeführt zu werden, die gemeinsam mit einer Anlage zum Bearbeiten eines Werkstücks, das vorzugsweise zumindest abschnittsweise aus Holz, einem Holzwerkstoff, und/oder einem Kunststoff ausgebildet ist, betreibbar ist, so dass das Verfahren gemäß einer der vorstehend beschriebenen Ausführungsformen durchgeführt wird. Somit lässt sich eine bestehende Steuerung einer Anlage mit dem Programm bestücken, so dass die Steuerung zum Ausführen des Verfahrens beitragen kann.

Ebenfalls bezieht sich die Erfindung auf ein Sensorausrüstungsset zum Ausrüsten einer Anlage zum Bearbeiten eines Werkstücks, das vorzugsweise zumindest abschnittsweise aus Holz, einem Holzwerkstoff, und/oder einem Kunststoff ausgebildet ist, mit einer Sensorik, zum Einrichten der Anlage zur Durchführung eines Verfahrens zum Erkennen eines Fehlers und zum örtlichen Eingrenzen eines Fehlers, wobei die Sensorik mehrere für das Erfassen eines Werkstückparameters geeignete Sensoren aufweist.

Mit dem Sensorausrüstungsset kann eine Anlage, die nicht zum Ausführen des Verfahrens gemäß einem der vorstehenden beschriebenen Aspekte bzw. einer oder mehrerer der beschriebenen Ausführungsformen geeignet ist, nachgerüstet werden, so dass das Verfahren ausgeführt werden kann. Es lässt sich daher vermeiden, dass Anlagen komplett ersetzt werden müssen, um eine bessere Leistung über einen langfristigen Zeitraum zu erzielen. Dies ist von besonderem Vorteil, da in Anlagen bereits vorhandene Sensoren in der Regel nicht optimal oder sogar komplett ungeeignet positioniert sind, um Werkstückparameter zu erfassen, und oft der Sensortyp in vorhandenen Anlagen auch nicht dafür geeignet ist. Das Sensorausrüstungsset kann hingegen mit Sensoren des Typs oder derjenigen Typen versehen werden, die für das geplante Erfassen von Werkstückparametern optimal sind (beispielsweise Lasersensoren), und die Sensoren können an den Stellen angebracht werden, an denen ein Werkstückparameter erfasst werden soll. Zum Beispiel kann in einem oder in mehreren Segmenten ein Sensor oberhalb und/oder unterhalb des Laufbands angebracht werden, und bei einem oder mehreren Aggregaten (nach Wunsch auch bei jedem) können ein oder mehrere Sensoren angebracht werden.

Gemäß einiger bevorzugter Ausführungsformen weist das Sensorausrüstungsset mindestens eine Sensoreinrichtung mit zumindest einem der Sensoren des Sets auf, wobei die Sensoreinrichtung dazu eingerichtet ist, ein Signal über eine Kabelverbindung oder drahtlos an ein Empfangsgerät zu übermitteln. Dabei kann der Teil der Einrichtung, der zum Versenden von Daten eingerichtet ist, einstückig mit dem Sensor oder als separates Bauteil oder als separate Bauteile ausgebildet sein.

Einige bevorzugte Ausführungsformen des Sensorausrüstungssets bzw. Sensornachrüstsets weisen ferner einen vorstehend beschriebenen Datenträger auf. Somit lässt sich das Sensornachrüstset sowohl dazu verwenden, eine Anlage mit den zum Erfassen gewünschter Werkstückparameter notwendigen Sensoren zu bestücken, als auch eine Datenverarbeitungsanlage in die Lage zu versetzen, mit der Anlage und den Sensoren zusammen zu arbeiten, um das erfindungsgemäße Verfahren oder eine Weiterbildung davon in der laufenden Anlage zu betreiben.

Ein Aspekt der Erfindung bezieht sich auf eine Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist und jedes Segment zumindest einen Sensor zum Erfassen eines Werkstückparameters bezieht, aufweist. Die Anlage weist ferner eine Steuerung auf, die dazu eingerichtet ist, das Verfahren nach einem der vorstehend beschriebenen Aspekte auszuführen.

Die Erfindung ist nicht auf Anlagen beschränkt, bei denen jedes Segment einen entsprechenden Sensor aufweist, sondern schließt auch Anlagen ein, bei denen ein oder mehrere Segmente keinen Sensor aufweisen. Alternativ dazu kann auch die Segmentierung entsprechend umdefiniert werden, so dass jedes der "neuen" Segmente einen Sensor aufweist (in einigen Fällen sind dann nur noch zwei Segmente vorhanden, nachdem die Definition der Segmente angepasst worden ist).

Gemäß einiger Ausführungsformen ist die Anlage mit einem Sensorausrüstungsset nach einem der vorstehend beschriebenen Aspekte versehen.

Kurze Beschreibung der Figuren

Im Folgenden werden bevorzugte Ausführungsformen der vorliegenden Erfindung unter Bezugnahme auf die Figuren beschrieben.

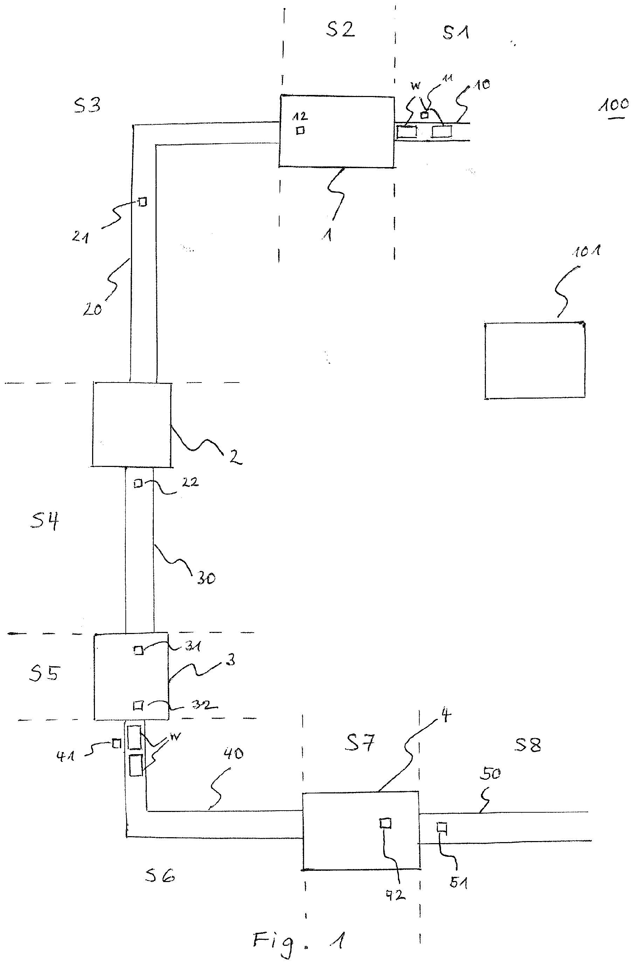

Fig. 1    ist eine schematische Ansicht einer Anlage zum Bearbeiten eines Werkstücks.

Fig. 1 ist eine schematische Ansicht einer Anlage 100 zum Bearbeiten eines Werkstücks w, das zumindest abschnittsweise aus Holz oder einem Holzwerkstoff ausgebildet ist. Konkret handelt es sich bei der dargestellten Anlage 100 um eine Kantenanlage zum Anbringen von Massivholz- oder Papierkanten an Holz- oder Holzwerkstoffstücken.

Zum Durchführen eines Verfahrens zum Erkennen eines Fehlers und zum örtlichen Eingrenzen einer Fehlerursache in der Anlage 100, ist die Anlage 100 in Segmente unterteilt. Bei einigen Ausführungsformen beträgt die Gesamtanzahl von Segmenten zwei, bei anderen Ausführungsformen ist die Anzahl höher, manchmal auch wesentlich höher. Die Anlage von Fig. 1 ist beispielsweise in acht Segmente S1 bis S8 unterteilt.

Die Anlage 100 weist zudem vier Bearbeitungsaggregate 1, 2, 3, 4 zum Bearbeiten auf. Andere Ausführungsformen können eine abweichende Anzahl von Bearbeitungsaggregaten aufweisen. Zudem können Anlagen, bei denen das Verfahren durchgeführt wird, auch Überprüfungsaggregate und/oder Aggregate aufweisen, die eine oder mehrere Bearbeitungs- und/oder Überprüfungsfunktionen ausführen. Ein Beispiel für ein Aggregat ist ein Kantenbeschichtungsaggregat, das eine Kante an einem Holzwerkstück anbringt, beispielsweise beim Herstellen eines Tisches. Andere Beispiele sind ein Säge-, ein Bohr-, ein Fräs-, ein Verleimungs-, und/oder ein Schweißaggregat.

Im Fall von Fig. 1 sind sämtliche Aggregate 1 bis 4 unterschiedlichen Segmenten zugeordnet, nämlich den Segmenten S2, S4, S5 und S7. Bei anderen Ausführungsformen kann ein Segment auch zwei oder mehr Aggregate aufweisen.

Das erste Segment S1 weist einen Förderbandabschnitt 10 auf, der zu dem ersten Bearbeitungsaggregat 1 führt. Das zweite Segment S2 weist das erste Bearbeitungsaggregat 1 auf. Das dritte Segment S3 weist einen weiteren Förderbandabschnitt 20 auf, der von dem ersten Bearbeitungsaggregat 1 zu dem zweiten Bearbeitungsaggregat 2 führt. Das vierte Segment S4 weist sowohl das zweite Bearbeitungsaggregat 2 als auch einen weiteren Förderbandabschnitt 30 auf, der von dem zweiten Bearbeitungsaggregat 2 zu dem dritten Bearbeitungsaggregat 3 führt. Bei anderen Ausführungsformen ist die Anlage hingegen feiner unterteilt, sodass jedes Aggregat einem eigenen Segment zugeordnet ist. Bei anderen Ausführungsformen sind wiederum mehrere Bandabschnitte und/oder ein oder mehrere Aggregate demselben Segment zugeordnet.

Das fünfte Segment S5 weist das dritte Bearbeitungsaggregat 3 auf. Das sechste Segment S6 weist einen weiteren Förderbandabschnitt auf, der von dem dritten Bearbeitungsaggregat 3 zu dem vierten Bearbeitungsaggregat 4 führt. Das siebte Segment S7 weist das vierte Bearbeitungsaggregat 4 auf. Das achte Segment S8 weist schließlich einen Förderbandabschnitt 50 auf, der von dem vierten Bearbeitungsaggregat 4 bezüglich Werkstückdurchflussrichtung stromabwärts führt.

In der Anlage 100 findet ein hoher Durchfluss an Werkstücken statt. Bei dieser Ausführungsform werden am Bandabschnitt 50 bei normalem Betrieb der Anlage 100 pro Tag zwischen 10000 und 12000 bearbeitete Werkstücke abgeführt.

Die Anlage 100 weist ferner auch eine Steuerung 101 auf, die einen Betrieb der Anlage 100 steuert. Dabei finden bei dieser Ausführungsform unter anderem Regelungen von Aggregaten und Förderbandabschnitten statt. Die Steuerung 101 kommuniziert drahtlos mit Aggregaten und sammelt beispielsweise Dateninformationen von Sensoren, die in den Aggregaten angeordnet sind.

Die Anlage 100 ist überdies mit speziellen Sensoren ausgestattet, die zum Durchführen des Fehlererkennungsverfahrens dienen. Hierzu wurde die Anlage mit einem (nicht separat dargestellten) Sensornachrüstset ausgerüstet, welches sowohl Sensoren aufweist, die jeweils zum Erfassen eines Werkstückparameters oder mehrerer Werkstückparameter geeignet sind, als auch einen (nicht dargestellten) Datenträger, auf dem ein Programm gespeichert ist, welches dazu geeignet ist, mit der Steuerung 101 ausgeführt zu werden, so dass die Steuerung 101 gemeinsam mit den anderen Komponenten der Anlage 100 das Fehlererkennungsverfahren durchführen kann.

Hierzu sind Sensoren 11 oberhalb und unterhalb des Förderbandabschnitts 10 im ersten Segment S1 angeordnet. Bei dieser Ausführungsform dienen die Sensoren 11 jeweils zum Erfassen eines ersten Abstands d1 zum Werkstück (von oberhalb des Werkstücks) und zum Erfassen eines zweiten Abstands d2 zum Werkstück (von unterhalb des Werkstücks) geeignet.

Weiterhin ist ein Sensor 12 im ersten Aggregat 1 (d.h. im zweiten Segment S2) angeordnet. Ein Sensor 21 ist beim Bandabschnitt 20 im dritten Segment S3 angeordnet. Ein weiterer Sensor 22 ist am Bandabschnitt 30 im vierten Segment S4, direkt stromabwärts vom zweiten Aggregat 2, angeordnet. Das fünfte Segment S5 weist im dritten Aggregat 3 weitere Sensoren 31 und 32 auf. Sensoren 41 sind auch oberhalb und unterhalb des Förderbandabschnitts 40 im sechsten Segment S6 angeordnet. Das siebte Segment S7 weist im vierten Aggregat 4 einen Sensor 42 auf, und ein Sensor 51 ist auch im achten Segment S8, am Bandabschnitt 50 angeordnet.

Sämtliche der genannten zusätzlichen Sensoren 11, 12, 21, 22, 31, 32, 41, 42 und 51 ("zusätzlich" zu bereits in einer gewöhnlichen Anlage, die nicht zum Ausführen des Fehlererkennungsverfahrens gemäß dieser Offenbarung ausgebildet sind, vorhandenen Sensoren) sind zum Erfassen eines Werkstückparameters geeignet. Dabei ist der zu erfassende Werkstückparameter nicht bei allen der genannten Sensoren der gleiche.

Der Sensor 12 ist beispielsweise zum Erfassen von Ziehklingenspan ausgebildet. Der Sensor 51 erfasst beispielsweise loses Kantenband. Der Sensor 42 ist beispielsweise zum Erfassen eines Reflexionsgrads des Werkstücks ausgebildet. Der Sensor 32 ist zum Erfassen einer Bohrung ausgebildet, und der Sensor 31 ist zum Erfassen einer Schüsselung (Ungleichförmigkeit) ausgebildet. Ferner ist der Sensor 22 zum Erfassen einer Nut ausgebildet, und der Sensor 21 ist zum Erfassen eines Deckschichtüberstands ausgebildet.

Die Sensoren 11 sind zum Erfassen eines Abstands d1 vom Sensor oberhalb des Werkstücks w bis zum Werkstück und eines Abstands d2 vom Sensor unterhalb des Werkstücks w bis zum Werkstück geeignet. Auch die Sensoren 42 sind zum Erfassen eines Abstands d1' vom Sensor oberhalb des Werkstücks w bis zum Werkstück und eines Abstands d2' vom Sensor unterhalb des Werkstücks w bis zum Werkstück geeignet. Sowohl die zwei (der obere und der untere) Sensoren 11 als auch die zwei (der obere und der untere) Sensoren 41 sind als Lasersensoren ausgebildet.

Die oberen Sensoren 11 und 41 haben bei dieser Ausführungsform jeweils eine Reichweite von bis zu ungefähr 130mm, und die unteren Sensoren 11 und 41 jeweils eine Reichweite bis zu ungefähr 60mm.

Allgemeiner sind bei dieser Ausführungsformen einer Anlage 100 die beschriebenen Sensoren 11, 12, 21, 22, 31, 32, 41, 42 und 51 jeweils mit entsprechenden Einrichtungen verbunden, die dazu eingerichtet, über eine drahtlose Kommunikation Daten an die Steuerung 101 zu übermitteln, welche diese Daten empfängt und laufend verarbeitet. Bei anderen Ausführungsformen ist die Kommunikation über eine Kabelverbindung implementiert. Die Steuerung 101 verfügt über ein Empfangsgerät, welches dazu geeignet ist, die drahtlos übermittelten Daten zu empfangen.

Die Anlage 100, und insbesondere die Steuerung 101, sind dazu eingerichtet, ein Verfahren zum Erkennen eines Fehlers in der Anlage 100 und zum örtlichen Eingrenzen einer Ursache des Fehlers auszuführen.

Das Verfahren umfasst das jeweilige Erfassen von vorstehend beschriebenen Werkstückparametern, mit jedem der Sensoren 11, 12, 21, 22, 31, 32, 41, 42 und 51 in den Segmenten S1 bis S8 der Anlage 100.

Die Zustandsinformationen werden jeweils an die Steuerung 101 übermittelt, und diese vergleicht bei dieser Ausführungsform für jeden der übermittelten Werte der jeweiligen Zustandsinformation, ob der Wert einen unteren Schwellenwert unterschreitet bzw. einen oberen Schwellenwert überschreitet.

Zudem wird bei dieser Ausführungsform auf Basis der von den Sensoren 11 und 41 übermittelten Abstandswerte eine Reihe von Berechnungen durchgeführt. Dabei ist der Abstand zwischen dem jeweiligen oberen Sensor und dem jeweiligen unteren Sensor bekannt (oder kann durch eine Messung ermittelt werden). Der Abstand zwischen den beiden Sensoren 11 wird als $d_{sum}$ bezeichnet, und der Abstand zwischen den beiden Sensoren 11 wird als $d_{sum}'$ bezeichnet.

Zudem sind bei dieser Ausführungsform auch die Länge 1 und die Breite b eines Werkstücks bekannt (diese sind beide wesentlich größer als die Dicke d der in der Anlage 100 bearbeitenden Werkstücke), und aus diesen wird eine Diagonale $\gamma$ einer Seitenfläche berechnet: $\gamma = \sqrt{l^2 + b^2}$. In Funktion dieser Diagonale wird ein Maß $\delta$ für die Toleranz festgelegt als $\delta = 0.2\% \cdot \gamma$. Zudem wird gemäß bevorzugter Ausführungsformen die Toleranz in einem Bereich zwischen $394 \mu m$ bis $2mm$ eingestellt. Ergibt die vorstehende Berechnung einen kleineren bzw. einen größeren Wert, so wird $\delta$ auf $394 \mu m$ bzw. auf $2mm$ festgelegt. Diese Werte sind für Holzbearbeitung besonders geeignet.

Die Steuerung berechnet als einen Verfahrensschritt jeweils die Dicke d bzw. d' eines Werkstücks, sowohl für die Position der Sensoren 11, als auch für die Position der Sensoren 41, wie folgt: $d = d_{sum} - (d1 + d2)$ für die Position der Sensoren 11; und $d' = d_{sum}' - (d1' + d2')$ für die Position der Sensoren 41. Danach wird jeweils ermittelt, ob die Dicke mehr als um den Toleranzwert von einer vorbestimmten Solldicke $d_{soll}$ abweicht, d.h. es wird überprüft ob $d - d_{soll} > \delta$, und ob $d' - d_{soll}' > \delta$. Falls eine dieser Ungleichungen erfüllt ist, so wird an der jeweiligen Stelle der Sensoren in der Anlage festgestellt, dass das entsprechend vorbeilaufende Werkstück zu dick ist. Weiterhin wird bei dieser Ausführungsform überprüft, ob die Ungleichung $d_{soll} - d > \delta$, und ob $d_{soll}' - d' > \delta$ erfüllt ist. Falls eine dieser Ungleichungen erfüllt ist, ist das entsprechende Werkstück an der jeweiligen Stelle in der Anlage zu dünn. Bei dem Verfahren gemäß der beschriebenen Ausführungsform wird das entsprechende Werkstück nach Feststellung, dass es zu dünn bzw. zu dick ist, überdies automatisch als fehlerhaft markiert. Hierzu ist ein entsprechendes Markierelement vorgesehen, dass über einen Regelprozess angesteuert wird. Zusätzlich oder alternativ dazu kann eine Fehlermeldung ausgegeben werden. Bei einigen Ausführungsformen wird eine Fehlermeldung erst dann ausgegeben, wenn ein kritischer Schwellenwertprozentsatz an fehlerbehafteten Werkstücken erkannt worden ist.

Bei dieser Ausführungsform werden auch jeweilige Sollwerte für den oberen Abstand $d1_{Soll}$ und den unteren Abstand $d2_{Soll}$ vorgegeben. Es wird dann jeweils überprüft, ob die Ungleichung $d1_{Soll} - d1 > \delta$ und/oder ob $d1_{Soll}' - d1' > \delta$ erfüllt ist. Wenn ja, ist das betreffende Werkstück nach oben verbogen (d.h., es liegt eine Schüsselung vor). Weiterhin wird überprüft, ob die Ungleichung $d1 - d1_{Soll} > \delta$ oder $d1' - d1_{Soll}' > \delta$ erfüllt ist. Wenn ja, ist das betreffende Werkstück nach unten verbogen (d.h., es liegt eine Schüsselung vor). Es wird auch überprüft, ob die Ungleichung $d2_{Soll} - d2 > \delta$ oder $d2_{Soll}' - d2' > \delta$ erfüllt ist. Wenn ja, ist das betreffende Werkstück nach unten verbogen (Schüsselung). Weiterhin wird überprüft, ob die Ungleichung $d2 - d2_{Soll} > \delta$ oder $d2' - d2_{Soll}' > \delta$ erfüllt ist. Wenn ja, ist das betreffende Werkstück nach oben verbogen (Schüsselung). Wenn keine der Ungleichungen erfüllt ist, ist das Werkstück (zumindest hinsichtlich Abwesenheit von Biegungsdeformation) als "akzeptabel" einzustufen.

Weiterhin wird mittels der Sensoren 11 und 41 auch ermittelt, ob ein Werkstück zwischen den jeweiligen oberen und unteren Sensoren vorhanden ist. Es wird dann auf das Vorhandensein eines Werkstücks geschlossen, wenn die Summe der gemessenen Abstände der Sensoren gleich groß oder größer ist als der Abstand zwischen den Sensoren.

Die genannten Fehler werden von der Steuerung 101 überwacht, insbesondere, ob Werkstücke zu dünn, zu dick, nach unten, oder nach oben verbogen sind. Dabei wird ein Signal mit einer Fehlermeldung ausgegeben, wenn ein vorbestimmter Schwellenwert überschritten wird - beispielsweise, wenn ein Fehler öfter als eine vorbestimmte Anzahl von Malen an einem Tag ermittelt worden ist, oder wenn eine Abweichung von dem Toleranzwert um mehr als einen Schwellenwert abweicht. Bei der vorliegenden Ausführungsform können Schwellenwerte durch einen Benutzer eingestellt und geändert werden.

Weiterhin ist die Steuerung 101 bei dieser Ausführungsform auch dazu eingerichtet, Trends zu berechnen. Es wird also beispielsweise überwacht, ob eine Fehlerrate zunimmt. Wenn die Rate an zu dünnen, zu dicken, nach oben gebogenen oder nach unten gebogenen Werkstücken beispielsweise um mehr als um einen vorbestimmten Schwellenwert zugenommen hat, wird eine Fehlermeldung ausgegeben. Auf diese Weise kann einem tatsächlichen Leistungsverlust der Anlage 100 (zum Beispiel eine geringere verarbeitete Stückzahl von akzeptablen Werkstücken pro Tag) vorgebeugt werden, weil bereits schleichende Leistungsverluste und/oder -tendenzen erkannt werden. Somit kann rechtzeitig ein Teil der Anlage näher untersucht und/oder gewartet werden, beispielsweise während einer regulären Wartungs- und/oder Auszeit der Anlage 100.

Allgemeiner ausgedrückt ermittelt die Steuerung in Abhängigkeit der erfassten und übermittelten Werkstückparameterdaten, ob ein Fehler vorliegt. Dabei wird nicht bereits beim Vorliegen einer Abweichung eines Werts von einem Sollbereich auf einen Fehler geschlossen, sondern es lassen sich Schwellenwert einstellen. So kann beispielsweise ermittelt werden, dass ein Fehler beim Sensor 41 vorliegt, wenn während einer längeren Zeitdauer ein zu hoher Prozentsatz von Werkstücken mit von Sollbereichen abweichenden Werkstückparametern erfasst worden ist.

Mit anderen Worten umfasst das Verfahren das auf Basis der Werkstückparameter Ermitteln, ob ein Fehler vorliegt. Das Verfahren umfasst auch, wenn ein Fehler vorliegt, Identifizieren in welchem der zumindest zwei Segmente der Anlage der Fehler vorliegt, zum örtlichen Eingrenzen der Fehlerursache. Dies wird bei dieser Ausführungsform von der Steuerung 101 durchgeführt.

Bei der Ausführungsform von Fig. 1 wird beispielsweise aus der Information, bei welchem Sensor ungewöhnliche Werte für den Werkstückparameter ermittelt worden sind, eine Eingrenzung der Fehlerursache vorgenommen. Bei einigen Ausführungsformen wird beispielsweise aus der Tatsache, dass ein Sensor im Segment S abweichende Werte liefert, geschlossen, dass der Fehler im Segment S vorliegt. Bei anderen Ausführungsformen hingegen, und so auch bei der Ausführungsform von Fig. 1, kann ein Fehler aufgrund eines Sensors im einen Segment einen Hinweis auf die Fehlerquelle in einem anderen Anlagensegment hinweisen. Als Beispiel dient das Erkennen eines nach unten oder nach oben gebogenen Werkstücks bei den Sensoren 41 im Segment S6. Wenn gleichzeitig ermittelt wird, dass in den Segmenten S1 bis S4 "normale" (d.h. innerhalb von entsprechenden Sollbereichen liegende) Werkstückparameterwerte vorliegen, so wird die Fehlerursache bei dieser Ausführungsform auf das Segment S5 eingegrenzt.

Weiterhin umfasst das Verfahren das Ausgeben eines Signals, das die Information enthält, in welchem Segment der Fehler (aller Voraussicht nach) vorliegt. Bei der vorliegenden Ausführungsform wird das Signal von der Steuerung 101 ausgegeben und dem Bedienpersonal der Anlage beispielsweise an einem Bildschirm einer Datenverarbeitungsanlage angezeigt. Bei anderen Ausführungsformen werden akustische Signale ausgegeben, beispielsweise an bestimmten Positionen in der Anlage. Alternativ dazu oder zusätzlich können auch optische Warnungen ausgegeben werden. So kann beispielsweise eine Leuchte anzeigen, dass im dritten Segment eine Fehlerquelle vermutet wird, etc.

Bei dem bei der Anlage gemäß der Ausführungsform von Fig. 1 durchgeführten Verfahren beinhaltet das Identifizieren, dass der Fehler einem bestimmten Aggregat oder einem bestimmten Teil der Anlage zwischen zwei Aggregaten (in diesem Fall: ein Laufbandabschnitt) zugeordnet wird, und das ausgegebene Signal von der Steuerung 101 beinhaltet die Information, welches Aggregat oder welcher Teil der Anlage zwischen zwei Aggregaten fehlerbehaftet ist.

Mit anderen Worten wird bei dieser Ausführungsform der Fehler einem der Bandabschnitte 10, 20, 30, 40, 50 oder einem der Aggregate 1, 2, 3 oder 4 zugeordnet. Bei anderen Ausführungsformen ist die örtliche Auflösung der Fehlereingrenzung allerdings höher (so kann beispielsweise ein Fehler einem bestimmten Teil eines Aggregats oder eines Laufbandabschnitts zugeordnet werden) oder, alternativ dazu, weniger genau (so wird beispielsweise ein Fehler dem Teil der Anlage, der stromaufwärts von einem bestimmten Punkt ist, zugeordnet, etc.). Die Auflösung der Fehlerquellenzuordnung kann auch unterschiedlich hoch sein, je nach dem was für eine Sorte von Fehler erkannt worden ist.

Die Erfindung deckt auch zahlreiche Abwandlungen und modifizierte Ausführungsformen ab.

**Patentansprüche**

1. Verfahren zum Erkennen eines Fehlers und zum örtlichen Eingrenzen einer Fehlerursache in einer Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist, umfassend die Schritte:

   - Erfassen einer Werkstückparameters in zumindest zwei Segmenten der Anlage;
   - auf Basis der erfassten Werkstückparameter ermitteln, ob ein Fehler vorliegt, wobei vorzugsweise ermittelt wird, ob ein zukünftiger Leistungsverlust der Anlage zu erwarten ist, und dass ein Fehler vorliegt, wenn ein zukünftiger Leistungsverlust erwartet wird;
   - wenn ein Fehler vorliegt, Identifizieren in welchem der zumindest zwei Segmente der Anlage der Fehler vorliegt, zum örtlichen Eingrenzen der Fehlerursache; und
   - Ausgeben eines Signals, das die Information enthält, in welchem Segment der Fehler vorliegt.

2. Verfahren nach Anspruch 1, bei dem der Leistungsverlust definiert ist als ein unter einen vorbestimmten Grenzwert Fallen einer Stückzahl von durch die Anlage während einer vorbestimmten Zeiteinheit verarbeiteten Werkstücken oder als eine andere die Leistung der Anlage quantifizierende Kenngröße.

3. Verfahren nach Anspruch 1 oder 2, bei dem das Vorliegen des Fehlers ermittelt wird, bevor der Leistungsverlust tatsächlich auftritt, und/oder bei dem der Fehler auf Basis einer zeitlichen Entwicklung von erfassten Zustandsinformationen ermittelt wird.

4. Verfahren nach einem der vorstehenden Ansprüche, bei dem die Anlage zwei oder mehr Aggregate zum Bearbeiten oder Überprüfen von Werkstücken aufweist und mindestens zwei Aggregate unterschiedlichen Segmenten zugeordnet sind, wobei das Identifizieren vorzugsweise beinhaltet, dass der Fehler einem bestimmten Aggregat oder einem bestimmten Teil der Anlage zwischen zwei Aggregaten zugeordnet wird, und das ausgegebene Signal die Information beinhaltet, welches Aggregat oder welcher Teil der Anlage zwischen zwei Aggregaten fehlerbehaftet ist.

5. Verfahren nach einem der vorstehenden Ansprüche, bei dem zumindest ein der erfassten Werkstückparameter ein Abstand von einem Sensor zu einem Werkstück und/oder eine Dicke, eine Höhe, eine Länge, oder eine Breite des Werkstücks ist.

6. Verfahren nach einem der vorstehenden Ansprüche, bei dem überprüft wird, ob ein Werkstück eine unerwünschte Biegung aufweist, indem Abstände von einem Sensor oder mehreren Sensoren zu zumindest zwei unterschiedlichen Positionen des Werkstücks gemessen werden, und für jeden der gemessenen Abstände ermittelt wird, ob der jeweilige Abstand einen unteren bzw. einen oberen Grenzwert unter- bzw. überschreitet, oder ermittelt wird, ob die Summe der Abstände oder ein anderer Parameter, der eine Funktion der Abstände ist, einen unteren bzw. einen oberen Grenzwert unter- bzw. überschreitet.

7. Verfahren nach einem der vorstehenden Ansprüche, bei dem überprüft wird, ob der erfasste Werkstückparameter oder ein Parameter, der eine Funktion der des erfassten Werkstückparameters oder der erfassten Werkstückparameter ist, innerhalb eines vorbestimmten Toleranzbereichs liegt.

8. Verfahren nach einem der vorstehenden Ansprüche, bei dem gezählt wird, wie oft derselbe Fehler auftritt und ermittelt wird, ob die Anzahl desselben Fehlers einen vorbestimmten Schwellenwert überschreitet, und eine Fehlermeldung ausgegeben wird, wenn der Schwellenwert überschritten wird.

9. Verfahren nach einem der vorstehenden Ansprüche, bei dem ein Fehler aus einer Tendenz von erfassten Werten eines Werkstückparameters oder aus Tendenzen von mehreren erfassten Werkstückparametern erkannt wird.

10. Verfahren nach einem der vorstehenden Ansprüche, bei dem zumindest ein erfasster Werkstückparameter eine Anzahl von geförderten Werkstücken, Ziehklingenspan, loses Kantenband, Deckschichtüberstand, eine Schüsselung, eine Nut, eine Bohrung, ein Oberflächenmerkmal, vorzugsweise ein Ausbruch, Dekor, und/oder ein Reflexionsgrad eines Werkstücks ist.

11. Verwendung des Verfahrens nach einem der vorstehenden Ansprüche in einer Kantenanlage zum Bearbeiten einer Kante eines Werkstücks und/oder zum Aufbringen eines Kantenelements an einem Werkstück.

12. Verwendung nach Anspruch 11, bei dem eine Diagonale einer Fläche eines Werkstücks berechnet oder gemessen wird, vorzugweise der größten Werkstückfläche, und ein Toleranzwert auf einen Wert im Bereich von 0.1% bis 1% der Diagonale eingestellt wird, und wobei überprüft wird, ob eine Dicke und/oder eine Flachheit zumindest eines Teils eines Werkstücks nicht mehr als um den Toleranzwert von einem vorbestimmten Sollwert abweicht, und wobei der Toleranzwert vorzugsweise auf einen Wert zwischen 300 $\mu$m und 2.5 mm eingestellt wird,.

13. Datenträger, auf dem ein Programm gespeichert ist, welches dazu geeignet ist, auf einer Datenverarbeitungsanlage ausgeführt zu werden, die gemeinsam mit einer Anlage zum Bearbeiten eines Werkstücks, das vorzugsweise zumindest abschnittsweise aus Holz, einem Holzwerkstoff, und/oder einem Kunststoff ausgebildet ist, betreibbar ist, so dass das Verfahren nach einem der vorstehenden Ansprüche durchgeführt wird.

14. Sensorausrüstungsset zum Ausrüsten einer Anlage zum Bearbeiten eines Werkstücks, das vorzugsweise zumindest abschnittsweise aus Holz, einem Holzwerkstoff, und/oder einem Kunststoff ausgebildet ist, mit einer Sensorik, zum Einrichten der Anlage zur Durchführung eines Verfahrens zum Erkennen eines Fehlers und zum örtlichen Eingrenzen eines Fehlers, wobei die Sensorik mehrere für das Erfassen eines Werkstückparameters geeignete Sensoren aufweist, wobei das Sensorausrüstungsset vorzugsweise einen Datenträger nach Anspruch 15 aufweist,
wobei das Sensorausrüstungsset vorzugsweise die mindestens eine Sensoreinrichtung mit zumindest einem der Sensoren aufweist, wobei die Sensoreinrichtung dazu eingerichtet ist, ein Signal über eine Kabelverbindung oder drahtlos an ein Empfangsgerät zu übermitteln.

15. Anlage zum Bearbeiten eines Werkstücks, das vorzugsweise zumindest abschnittsweise aus Holz, einem Holzwerkstoff, und/oder einem Kunststoff ausgebildet ist, wobei die Anlage mehrere Segmente aufweist und jedes Segment zumindest einen Sensor zum Erfassen eines Werkstückparameters aufweist, **dadurch gekennzeichnet, dass** die Anlage ferner eine Steuerung aufweist, die dazu eingerichtet ist, das Verfahren nach einem der Ansprüche 1 bis 10 auszuführen,
wobei die Anlage vorzugsweise mit einem Sensorausrüstungsset nach Anspruch 14 versehen ist.

Fig. 1

**Europäisches Patentamt**
**European Patent Office**
**Office européen des brevets**

## EUROPÄISCHER RECHERCHENBERICHT

Nummer der Anmeldung

EP 19 16 2766

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 379 782 B1 (COCCO DENNIS P [CA]) 27. Mai 2008 (2008-05-27)<br><br>* Zusammenfassung *<br>* Spalte 1, Zeile 1 - Zeile 22 *<br>* Spalte 5, Zeile 66 - Spalte 10, Zeile 3 *<br>* Spalte 12, Zeile 21 - Zeile 60 *<br>* Spalte 14, Zeile 11 - Spalte 16, Zeile 60 *<br>* Spalte 19, Zeile 26 - Zeile 38 *<br>* Ansprüche 1,22 *<br>* Abbildungen 1-9 *<br>----- | 1-4,7, 10,11, 13-15 | INV. G07C3/14 |
| X | DE 10 2008 061495 A1 (ATLAS COPCO CENTRAL EUROP GMBH [DE]) 17. Juni 2010 (2010-06-17)<br>* Zusammenfassung *<br>* Absatz [0011] - Absatz [0028] *<br>* Absatz [0045] *<br>* Absatz [0051] - Absatz [0056] *<br>* Absatz [0075] - Absatz [0081] *<br>* Absatz [0091] - Absatz [0093] *<br>* Abbildungen 1,2,9 *<br>----- | 1,3-6,8, 9,11-13, 15 | |
| A | DE 10 2007 008699 A1 (MECHATRONICS GMBH DEUTSCHE [DE]) 21. August 2008 (2008-08-21)<br>* Zusammenfassung *<br>* Absatz [0020] - Absatz [0021] *<br>* Absatz [0027] - Absatz [0035] *<br>* Absatz [0043] - Absatz [0044] *<br>* Absatz [0067] - Absatz [0069] *<br>* Abbildungen 1,10,11 *<br>----- <br>-/-- | 5,6,12 | |

**RECHERCHIERTE SACHGEBIETE (IPC)**

G07C
G05B

Der vorliegende Recherchenbericht wurde für alle Patentansprüche erstellt

| Recherchenort | Abschlußdatum der Recherche | Prüfer |
|---|---|---|
| Den Haag | 24. Juli 2019 | Post, Katharina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

**Nummer der Anmeldung**

EP 19 16 2766

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2012 213481 A1 (BOSCH GMBH ROBERT [DE]; SAMSUNG SDI CO [KR]) 6. Februar 2014 (2014-02-06) * Zusammenfassung * * Absatz [0001] * * Absatz [0010] - Absatz [0013] * * Absatz [0020] * * Absatz [0026] * * Abbildung 1 * ----- | 5,12 | |
| A | EP 2 803 942 A1 (GNUTTI SPA TRAFILIERIE [IT]) 19. November 2014 (2014-11-19) * Zusammenfassung * * Absatz [0001] - Absatz [0007] * * Absatz [0020] - Absatz [0026] * * Absatz [0043] * * Abbildung 1 * ----- | 6 | |
| A | EP 3 034 258 A1 (HOMAG HOLZBEARBEITUNGSSYSTEME [DE]) 22. Juni 2016 (2016-06-22) * Zusammenfassung * * Absatz [0002] - Absatz [0003] * * Absatz [0029] - Absatz [0031] * * Absatz [0068] * * Abbildungen 1,4,5 * ----- | 1,11,15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 24. Juli 2019 | Post, Katharina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 16 2766

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2019

| Im Recherchenbericht angeführtes Patentdokument | Datum der Veröffentlichung | Mitglied(er) der Patentfamilie | Datum der Veröffentlichung |
|---|---|---|---|
| US 7379782 B1 | 27-05-2008 | CA 2680476 A1<br>CN 101939766 A<br>EP 2140430 A1<br>US 7379782 B1<br>WO 2008116282 A1 | 02-10-2008<br>05-01-2011<br>06-01-2010<br>27-05-2008<br>02-10-2008 |
| DE 102008061495 A1 | 17-06-2010 | DE 102008061495 A1<br>EP 2364466 A1<br>WO 2010066375 A1 | 17-06-2010<br>14-09-2011<br>17-06-2010 |
| DE 102007008699 A1 | 21-08-2008 | KEINE | |
| DE 102012213481 A1 | 06-02-2014 | KEINE | |
| EP 2803942 A1 | 19-11-2014 | KEINE | |
| EP 3034258 A1 | 22-06-2016 | CN 105710935 A<br>DE 102014226333 A1<br>EP 3034258 A1<br>EP 3505318 A1 | 29-06-2016<br>23-06-2016<br>22-06-2016<br>03-07-2019 |

EPO FORM P0461

Für nähere Einzelheiten zu diesem Anhang : siehe Amtsblatt des Europäischen Patentamts, Nr.12/82